# EUROPEAN PATENT APPLICATION

(11) **EP 4 465 099 A1**
(43) Date of publication of application: **20.11.2024**
(21) Application number: 23174321.2
(22) Date of filing: 19.05.2023
(51) Int. Cl.: G02B 3/00, G02B 21/36, G02B 27/09, G06T 5/50, G01N 21/17

(54) **AN OPTICAL SYSTEM FOR FOURIER PTYCHOGRAPHY**

(71) Applicant: F. Hoffmann-La Roche AG, 4070 Basel (CH); Roche Diagnostics GmbH, 68305 Mannheim (DE)
(72) Inventor: Salzmann, Wenzel, 6343 Rotkreuz ZG (CH)
(74) Representative: Altmann Stößel Dick Patentanwälte PartG mbB

(57) **Abstract**

An optical system (110) configured for Fourier Ptychography is disclosed, comprising
- at least one array of light emitters (112), wherein each light emitter (112) is configured for emitting at least one illumination light beam towards a sample plane (114);
- at least one lenslet array (116) comprising a plurality of lenses, wherein each of the lenses is dedicated to at least one of the light emitters (112) of the array of light emitters (112), wherein orientation and shape of the respective lens is adapted to the dedicated light emitter (112), wherein the lenslet array (116) is configured for focusing the illumination light beams in the sample plane (114).

The array of light emitters (112) and the lenslet array (116) are arranged such that the sample plane (114) is illuminated by the illumination light beams under different illumination angles.

## Description

### Technical Field

The present application refers to an optical system configured for Fourier Ptychography, a digital microscopy system and a method for Fourier Ptychography. The invention further relates to computer program with program means for executing the method according to the invention. Devices, methods, and computer programs according to the present invention may be used in hematology or clinical chemistry analysis. Other fields of application of the present invention, however, are feasible.

### Background art

Fourier Ptychography (FPM) showed recently that very high resolution and image quality is feasible by using comparably simple optical setups. For example, FPM concepts are known from Guoan Zheng et al., "Concept, implementations and applications of Fourier ptychography," Nature Reviews Physics, 3, 207- 223 (2021), "Fourier ptychographic microscopy for filtration-based circulating tumor cell enumeration and analysis, "Long-working-distance synthetic aperture Fresnel off-axis digital holography", Pan Feng et al., Optics Express Vol. 17, Issue 7, pp. 5473- 5480 (2009), WO 2021/053374 A1, US 10,684,458 B2, US 2020/0351454 A1, WO 2016/090331 A1, US 2022/0043251 A1, US 10,394,011 B2, US 2019/0331902 A1, US 10,652,444 B2, US 2017/0146788 A1, US 2016/0341945A1 and KR 2315016 B1.

However, using FPM in low(er) cost digital microscopy systems may be problematic. FPM relies on the image acquisition of a large number of images, each taken with only one single light emitting diode (LED). Typical arrangements imply that the incident power per LED is low, especially for highly relevant large incident angles. The low intensity consequently increases camera integration time and hence limits the throughput of such systems.

### Problem to be solved

It is therefore desirable to provide methods and devices which address the abovementioned technical challenges. Specifically, methods, computer programs and devices shall be proposed which allow for increasing the throughput of FPM systems.

### Summary

This problem is addressed by an optical system configured for Fourier Ptychography, a digital microscopy system and a method for Fourier Ptychography with the features of the independent claims. Advantageous embodiments which might be realized in an isolated fashion or in any arbitrary combinations are listed in the dependent claims as well as throughout the specification.

As used in the following, the terms "have", "comprise" or "include" or any arbitrary grammatical variations thereof are used in a non-exclusive way. Thus, these terms may both refer to a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

Further, it shall be noted that the terms "at least one", "one or more" or similar expressions indicating that a feature or element may be present once or more than once typically will be used only once when introducing the respective feature or element. In the following, in most cases, when referring to the respective feature or element, the expressions "at least one" or "one or more" will not be repeated, non-withstanding the fact that the respective feature or element may be present once or more than once.

Further, as used in the following, the terms "preferably", "more preferably", "particularly", "more particularly", "specifically", "more specifically" or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features. Similarly, features introduced by "in an embodiment of the invention" or similar expressions are intended to be optional features, without any restriction regarding alternative embodiments of the invention, without any restrictions regarding the scope of the invention and without any restriction regarding the possibility of combining the features introduced in such way with other optional or non-optional features of the invention.

In a first aspect, an optical system configured for Fourier Ptychography is disclosed. The optical system comprises
- at least one array of light emitters, wherein each light emitter is configured for emitting at least one illumination light beam towards a sample plane;
- at least one lenslet array comprising a plurality of lenses, wherein each of the lenses is dedicated to at least one of the light emitters of the array of light emitters, wherein orientation and shape of the respective lens is adapted to the dedicated light emitter, wherein the lenslet array is configured for focusing the illumination light beams in the sample plane.

The array of light emitters and the lenslet array are arranged such that the sample plane is illuminated by the illumination light beams under different illumination angles.

The optical system can allow that the light intensity that can be delivered into the sample plane per light emitter, e.g. per LED, can be increased significantly by using a combination of several additional optical elements. The higher light intensity is advantageous and allows for shorter camera integration time and hence higher throughput time. The proposed optical system also can allow for an optimized arrangement of light emitters, e.g. of LEDs, that fits better the Printed Circuit Board Assembly (PCBA) manufacturing procedures, e.g. which typically lead to planar LED arrangements.

The term "system" as used herein is a broad term and is to be given its ordinary and customary meaning to a person of ordinary skill in the art and is not to be limited to a special or customized meaning. The term specifically may refer, without limitation, to an arbitrary set of interacting or interdependent components parts forming a whole. Specifically, the components may interact with each other in order to fulfill at least one common function. The at least two components may be handled independently or may be coupled or connectable. The term "optical system" as used herein is a broad term and is to be given its ordinary and customary meaning to a person of ordinary skill in the art and is not to be limited to a special or customized meaning. The term specifically may refer, without limitation, to a system comprising a plurality of optical components and configured for fulfilling at least one optical function.

The term "Fourier Ptychography" as used herein is a broad term and is to be given its ordinary and customary meaning to a person of ordinary skill in the art and is not to be limited to a special or customized meaning. The term specifically may refer, without limitation, to a computational imaging technique based on plurality of images of a sample acquired at different illumination angles. The acquired images may be combined using at least one iterative phase retrieval algorithm.

As used herein, the term "light" is a broad term and is to be given its ordinary and customary meaning to a person of ordinary skill in the art and is not to be limited to a special or customized meaning. The term specifically may refer, without limitation, to electromagnetic radiation in one or more of the infrared, the visible and the ultraviolet spectral range. Herein, the term "ultraviolet spectral range", generally, may refer to electromagnetic radiation having a wavelength of 1 nm to 400 nm, wherein the range of 300 to 400 nm is usually denominated as "near ultraviolet spectral range" (NUV). The term "infrared spectral range" (IR) generally refers to electromagnetic radiation of 760 nm to 1000 µm, wherein the range of 760 nm to 1.5 µm is usually denominated as "near infrared spectral range" (NIR) while the range from 1.5 µ to 15 µm is denoted as "mid infrared spectral range" (MidIR) and the range from 15 µm to 1000 µm as "far infrared spectral range" (FIR). For example, light used for the typical purposes of the present invention is light in a wavelength range from the near ultraviolet to the near infrared spectral range, e.g. from 340 to 800 nm. It shall be noted, however, that other spectral ranges are also feasible.

The term "light emitter", also denoted as emitter, as used herein is a broad term and is to be given its ordinary and customary meaning to a person of ordinary skill in the art and is not to be limited to a special or customized meaning. The term specifically may refer, without limitation, to at least one arbitrary device configured for generating at least one light beam. Each of the light emitters may comprise at least one coherent light source selected from the group consisting of at least one light-emitting diode, at least one surface emitting diode laser, at least one edge emitting diode laser.

For example, each of the light emitters comprises at least one light-emitting diode (LED). The term "light-emitting diode", as used herein, is a broad term and is to be given its ordinary and customary meaning to a person of ordinary skill in the art and is not to be limited to a special or customized meaning. The term specifically may refer, without limitation, to an optoelectronic semiconductor device capable of emitting light when an electrical current flows through the device. The optoelectronic semiconductor device may be configured for generating the light due to various physical processes, including one or more of spontaneous emission, induced emission, decay of metastable excited states and the like. Thus, as an example, the light-emitting diode, may comprise one or more of a light-emitting diode based on spontaneous emission of light, in particular an organic light emitting diode, a light-emitting diode based on superluminescence (sLED), or a laser diode (LD). In the following, without narrowing the possible embodiments of the light-emitting diode to any of the beforementioned physical principles or setups, the abbreviation "LED" will be used for any type of light-emitting diode.

For example, the light emitters may have a center wavelengths at least partially located in the spectral range of 340 to 800 nm. For example, the LED may have may have an emission range at least partially located in the spectral range from 340 to 800 nm.

The term "array" as used herein is a broad term and is to be given its ordinary and customary meaning to a person of ordinary skill in the art and is not to be limited to a special or customized meaning. The term specifically may refer, without limitation, to an ordered arrangement of objects. A position and/or an orientation of the objects in the arrangement may be fixed relative to the other objects in the arrangement.

The array of light emitters may comprise an ordered arrangement of the light emitters, wherein a position and/or an orientation of the light emitters relative to each other may be fixed. The array of light emitters may comprise a plurality of light emitters arranged in a matrix. The term "matrix" as used herein is a broad term and is to be given its ordinary and customary meaning to a person of ordinary skill in the art and is not to be limited to a special or customized meaning. The term specifically may refer, without limitation, to an arrangement of a plurality of elements in a predetermined geometrical order. The matrix specifically may be or may comprise a rectangular matrix having one or more rows and one or more columns. The rows and columns specifically may be arranged in a rectangular fashion. However, other arrangements are feasible, such as nonrectangular arrangements. As an example, circular arrangements are also feasible, wherein the elements are arranged in concentric circles or ellipses about a center point. For example, the array of light emitters may comprise a one-, two- or a three-dimensional array of light emitters.

The light emitters may be arranged such that they emit the illumination light beams under the same angle of light emission towards the sample plane. For example, the light emitters may be arranged within a flat plane parallel to the sample plane. The optical system may comprise the lenslet array configured for adjusting the illumination light beam such that the sample plane is illuminated by the illumination light beams under different illumination angles. However, other embodiments are possible. The light emitters of the array of light emitters may be arranged such that the light emitters emit the illumination light beams under different angles of light emission towards the sample plane. For example, each of the light emitters may be tilted individually with respect to the sample plane. For example, the light emitters may be arranged within a flat plane which may be tilted with respect to the sample plane. For example, the light emitters may be arranged on a curved plane. The lenslet array may be configured for guiding the illumination light beams to the sample plane.

The array of light emitters may be arranged, e.g. linearly arranged, on a printed circuit board assembly (PCBA). For example, the array of light emitters may be mounted using a "chip-on-board" technology and/or a "chip-on-flex" technology. For example, for arranging the light emitters on a curved plane LEDs may be used which are mounted to flex-print assemblies using a chip-on-board technology. The array of light emitters may be mounted on a flexible substrate. For example, Flexible printed circuits (FPC) may be used. FPC may be designed as described in D. Shavit et al., "The developments of LEDs and SMD Electronics on transparent conductive Polyester film", Vacuum International, 1/2007, S. 35 ff.

The light emitters of the array may be of the same type or, alternatively, of a different type. The light emitters of the array may be controllable independently from each other, such as by providing electric current to each of the light emitters independently. The light emitters may be configured for emitting light beams of the same or of different wavelengths. For example, the light emitters are configured for emitting light beams of the same wavelength.

The light emitters of the array of light emitters may be configured for sequentially emitting the illumination light beams. The term "sequentially emitting" as used herein is a broad term and is to be given its ordinary and customary meaning to a person of ordinary skill in the art and is not to be limited to a special or customized meaning. The term specifically may refer, without limitation, to emitting light beams at least partially at different times and/or time shifted.

The term "illumination light beam" as used herein is a broad term and is to be given its ordinary and customary meaning to a person of ordinary skill in the art and is not to be limited to a special or customized meaning. The term specifically may refer, without limitation, to light propagating from the array of light emitters to the sample plane. The term "illuminate", as used herein, is a broad term and is to be given its ordinary and customary meaning to a person of ordinary skill in the art and is not to be limited to a special or customized meaning. The term specifically may refer, without limitation, to the process of exposing at least one element to light.

The term "sample plane" as used herein is a broad term and is to be given its ordinary and customary meaning to a person of ordinary skill in the art and is not to be limited to a special or customized meaning. The term specifically may refer, without limitation, to a predefined location of a sample within the optical system. For example, the sample plane may be defined by a receptacle configured for holding a microscopy slide.

The term "sample" as used herein is a broad term and is to be given its ordinary and customary meaning to a person of ordinary skill in the art and is not to be limited to a special or customized meaning. The term specifically may refer, without limitation, to an aliquot of a substance such as a chemical or biological compound. The sample may be or may comprise at least one biological specimen, such as one or more of: blood; blood serum; blood plasma; urine; saliva. The sample may be or may comprise a biological material such as a tissue or a smear. The sample can be mixed, e.g. with some assay specific reagents involving chromogenic or turbidimetric indicators. Additionally or alternatively, the sample may be or may comprise a chemical substance or compound and/or a reagent. The sample may specifically be a liquid sample, such as an aliquot of a fluid substance of the chemical or biological compound. For example, the liquid sample may be or may comprise at least one pure liquid, such as a liquid substance and/or a solution containing one or more liquid substances, comprising the at least one chemical and/or the biological substance. As another example, the liquid sample may be or may comprise a liquid mixture, such as a suspension, an emulsion and/or a dispersion of one or more chemical and/or biological substances. However, other, in particular non-liquid samples are also possible. Other sample types may be, for example, tissue or homogenized material.

The sample may be provided using at least one microscopy slide. The term "microscopy slide", or slide, as used herein is a broad term and is to be given its ordinary and customary meaning to a person of ordinary skill in the art and is not to be limited to a special or customized meaning. The term may, specifically, refer, without limitation, to a substrate which is designated for a sample to be mounted on a surface of the slide. The substrate maybe mechanically stable, e.g. for a purpose of carrying the sample without any changes during the processing to the microscopy slide. The substrate may comprise any material which provides sufficient mechanical stability. The substrate may exhibit a surface which is configured to be compatible with biological material, e.g. for a purpose of carrying a biological specimen. By way of example, the microscopy slide is a glass slide since glass is known, on one hand, to provide sufficient mechanical stability and, on the other hand, to have a high compatibility with biological material. However, further kinds of materials for the microscopy slides may also be feasible. The microscopy slide may be a plate having a 2D extension and a thickness. The 2D extension of the plate may exhibit a rectangular or circular form. The thickness of the plate may be small compared to a size of the extension, preferably 20 %, more preferred 10 %, most preferred 5 %, or less than a measure for a linear extent of the 2D extension of the plate.

The term "lenslet array" as used herein is a broad term and is to be given its ordinary and customary meaning to a person of ordinary skill in the art and is not to be limited to a special or customized meaning. The term specifically may refer, without limitation, to an array comprising at least two lenses. The lenses may be converging lenses. Each of the lenses may be configured for focusing an illumination light beam generated by the dedicated light emitter and impinging on the lens in the sample plane. The lenses of the lenslet array may have a low diameter, e.g. a diameter of a few millimeters. The lenses of the lenslet array may have different properties, e.g. differ in shape and/or orientation. The lenses of the lenslet array may be arranged in a direction of propagation of the light beam from the light emitters to the sample plane. The lenses of the lenslet array may be high numerical aperture lenses. For example, the lenses may have a numerical aperture up to NA ~ 0.5. Using such a lenslet array can significantly reduce scanning time.

Each of the lenses is dedicated to at least one of the light emitters of the array of light emitters. The term "dedicated to at least one of the light emitters" as used herein is a broad term and is to be given its ordinary and customary meaning to a person of ordinary skill in the art and is not to be limited to a special or customized meaning. The term specifically may refer, without limitation, to an arrangement in which each lens is assigned to at least one of the light emitters. Orientation and shape of the respective lens is adapted to the dedicated light emitter. Each individual lens in shape and/or orientation may be optimized for a dedicated light emitter(s). The number of lenses of the array may correspond to a number of light emitters of the array of light emitters. However, other embodiments are feasible. For example, a plurality of light emitters may share a combined lens.

The array of light emitters and the lenslet array are arranged such that the sample plane is illuminated by the illumination light beams under different illumination angles. The term "illumination angle" as used herein is a broad term and is to be given its ordinary and customary meaning to a person of ordinary skill in the art and is not to be limited to a special or customized meaning. The term specifically may refer, without limitation, to an angle of incidence between a ray incident on a surface of the sample plane and the normal to the surface at a point of incidence. The illumination angles may differ between 0° and maximally 30° relative to the normal. The arrangement of the array of light emitters and the lenslet array may refer to a relative arrangement of the array of light emitters and the lenslet array. The optical system, in a beam path of the illumination light from the light emitter to the sample plane, may comprise the array of light emitters and the lenslet array only, without any further optical components. Such an arrangement may be in particular suitable for low to medium incident angles, e.g. between 0° and 30°.

The optical system further may comprise at least one parabolic reflector, e.g. a parabolic mirror. The term "parabolic reflector" as used herein is a broad term and is to be given its ordinary and customary meaning to a person of ordinary skill in the art and is not to be limited to a special or customized meaning. The term specifically may refer, without limitation, to a reflector having a paraboloidal three-dimensional shape. The parabolic reflector may have a reflective surface. The parabolic reflector may be arranged such that the illumination light beam having passed the lenslet array impinges on the parabolic reflector before impinging on the sample plane. The light emitters and/or the lenslet array may be arranged within a flat plane parallel to the sample plane with the light emitters aligned in the same orientation. This can allow that the illumination light beams, having passed the lenslet array, reach the parabolic reflector as parallel rays. The parabolic reflector may be configured for focusing parallel rays into a focus point on the sample plane. Using the lenslet array in combination with the parabolic reflector, e.g. a parabolic mirror, may be advantageous for medium to high incident angles, e.g. of 20° to 60° relative to the perpendicular.

The parabolic reflector may have a diameter of ≥ 200 mm. Such a large diameter parabolic reflector can allow for optimized positioning of the light emitters while still ensuring high intensities. Parabolic reflectors can be available at low cost and can be manufactured with high precision.

For example, the parabolic reflector may be used in combination with at least one lenslet array. Further LEDs may be placed at the bottom of the parabolic reflector. LEDs or an array of LEDs with respective lenslet array may be installed in the recess of the parabolic reflector. This can allow directing the light beam directly upwards to the sample plane (not via the parabolic reflector). Lenslet array may cover low incident angles and the parabolic reflector can cover medium to high incident angles.

The parabolic reflector may comprise a continuous surface. Alternatively, the parabolic reflector may comprise a segmented parabolic reflector. The term "segmented parabolic reflector" as used herein is a broad term and is to be given its ordinary and customary meaning to a person of ordinary skill in the art and is not to be limited to a special or customized meaning. The term specifically may refer, without limitation, to an array of subreflectors configured for optically functioning as segments of a monolithic parabolic reflector. Using the lenslet array in combination with a segmented parabolic reflector, e.g. a parabolic mirror, may be advantageous for medium to very high incident angles, e.g. 30° to 80° relative to the perpendicular.

For example, the segmented parabolic reflector may be used in combination with at least one lenslet array. Further LEDs may be placed at the bottom of the segmented parabolic reflector. LEDs or an array of LEDs with respective lenslet array may be installed in the recess of the segmented parabolic reflector. This can allow directing the light beam directly upwards to the sample plane (not via the segmented parabolic reflector). Lenslet array may cover low incident angles and the segmented parabolic reflector can cover medium to very high incident angles.

The optical system may comprise at least one refractive optical element. The refractive optical element may be arranged such that the illumination light beam having passed the lenslet array impinges on the refractive optical element before impinging on the sample plane. The refractive optical element may comprise at least one Fresnel lens. A diameter of the Fresnel lens may be ≥ 200 mm. Using the lenslet array in combination with at least one Fresnel lens can allow for improved intensity in a forward direction.

The proposed arrangement of light emitters, e.g. LEDs, in combination of additional optical elements can allow to increase the light intensity of each LED (especially LEDs with large incident angles) that is delivered into a sample plane, e.g. of a hematology analyzer. An advantage of the higher light intensity may be allowing for a shorter camera integration time and hence higher throughput time. In addition, an optimized arrangement of light emitters may be possible that fits better the LED PCBA manufacturing procedures which typically lead to planar LED arrangements.

In a further aspect, a digital microscopy system is disclosed. The digital microscopy system comprising
- at least one optical system according to the present invention;
- at least one sample interface configured for receiving at least one microscopy slide;
- at least one image detector, wherein the image detector is configured for imaging a plurality of images of a sample on the microscopy slide illuminated under different illumination angles by the illumination light beams provided by the optical system;
- at least one processing device configured for reconstructing at least one combined image of the sample by using the plurality of images imaged by the image detector.

With respect to definitions and embodiments reference is made to the description of the optical system described in a first aspect of the present invention.

The term "system" as used herein is a broad term and is to be given its ordinary and customary meaning to a person of ordinary skill in the art and is not to be limited to a special or customized meaning. The term specifically may refer, without limitation, to an arbitrary set of interacting or interdependent components parts forming a whole. Specifically, the components may interact with each other in order to fulfill at least one common function. The at least two components may be handled independently or may be coupled or connectable. The term "digital microscopy system" as used herein is a broad term and is to be given its ordinary and customary meaning to a person of ordinary skill in the art and is not to be limited to a special or customized meaning. The term specifically may refer, without limitation, to a system configured for performing at least one microscopic function. The digital microscopy system may comprise at least one hematology analyzer or at least one digital pathology scanner.

The digital microscopy system may comprise at least one microscope objective. The term "microscope objective" as used herein is a broad term and is to be given its ordinary and customary meaning to a person of ordinary skill in the art and is not to be limited to a special or customized meaning. The term specifically may refer, without limitation, to at least one optical element configured for receiving light generated by the sample in response to the illumination by the illumination light beams and for focusing impinging light rays to produce an image. The microscope objective may comprise at least one lens. The microscope objective may comprise a plurality of lenses such as a lens system. The microscope objective may be configured for generating in combination with a respective imaging lens an image of the sample on the image detector. The microscope objective may have a defined magnification. The microscope objective may constitute a coordinate system, wherein "z" is a coordinate along an optical axis of the microscope objective, also denoted as z-axis or z-direction. A coordinate along the z-axis may be considered a longitudinal coordinate z. The directions transversal to the z-axis may be considered as x- and y-directions. The digital microscopy system may comprise a motorized focusing stage coupled to the microscope objective. The focusing stage may configured for controlling axial movement of the microscope objective along the optical axis of the microscope objective. Additionally or alternatively, the digital microscopy system may comprise a motorized z-moving stage coupled to the microscopic slide. The z-moving stage may be configured for controlling axial movement of the microscopic slide along the optical axis of the microscope objective, e.g. along the z-direction.

The term "sample interface" as used herein is a broad term and is to be given its ordinary and customary meaning to a person of ordinary skill in the art and is not to be limited to a special or customized meaning. The term specifically may refer, without limitation, to at least one receptacle configured for holding and/or positioning the microscopic slide. The sample interface may be part of an XY-moving stage, e.g. a motorized XY-stage, configured for moving the microscopic slide in an X,Y-plane. The XY-moving stage may be coupled to the microscopic slide. The XY-moving stage may be configured for controlling movement of the microscopic slide transversal to the optical axis of the microscope objective.

The term "image detector" as used herein is a broad term and is to be given its ordinary and customary meaning to a person of ordinary skill in the art and is not to be limited to a special or customized meaning. The term specifically may refer, without limitation, to at least one sensor device having at least one imaging element configured for recording or capturing spatially resolved one-dimensional, two-dimensional or even three-dimensional optical data or information. The image detector may comprise at least one camera. The camera may comprise a CCD chip or a CMOS chip.

The term "imaging" as used herein are broad terms and are to be given their ordinary and customary meaning to a person of ordinary skill in the art and are not to be limited to a special or customized meaning. The terms may, specifically, refer, without limitation, to generating and/or providing a two-dimensional representation of at least one property of the sample, also denoted by the term "image". The image may be processed and/or displayed, e.g. on a screen for being regarded by a user. The imaging may comprise generating and/or providing a digital image. The term "digital image" as used herein is a broad term and is to be given its ordinary and customary meaning to a person of ordinary skill in the art and is not to be limited to a special or customized meaning. The term specifically may refer, without limitation, to a discrete and discontinuous representation of the image. Thus, the term "digital image" may refer to a two-dimensional function, f(x,y), wherein intensity and/or color values are given for any x, y-position in the digital image, wherein the position may be discretized corresponding to recording pixels of the digital image. The imaging may comprise scanning the microscopic slide. The term "scanning" as used herein are broad terms and are to be given their ordinary and customary meaning to a person of ordinary skill in the art and are not to be limited to a special or customized meaning. The terms may, specifically, refer, without limitation, to imaging the microscopic slide at a plurality of different x,y-position positions. The scanning may comprise tile-based scanning and/or line-based scanning. The x,y-position may be set using at least one XY-moving stage, e.g. a motorized XY-stage, to move the microscopic slide. It is also noted that the system described herein may be used in connection with microscope slide scanning instrument architectures and techniques for image capture, stitching and magnification as described in US 2008/0240613 A1 and US10061107 B2 which are incorporated herein by reference, including features in connection with reconstituting an image.

The term "processing device" as used herein is a broad term and is to be given its ordinary and customary meaning to a person of ordinary skill in the art and is not to be limited to a special or customized meaning. The term specifically may refer, without limitation, to an arbitrary logic circuitry configured for performing basic operations of a computer or system, and/or, generally, to a device which is configured for performing calculations or logic operations. The processing device may be configured for processing basic instructions that drive the computer or system. As an example, the processing device may comprise at least one arithmetic logic unit (ALU), at least one floating-point unit (FPU), such as a math coprocessor or a numeric coprocessor, a plurality of registers, specifically registers configured for supplying operands to the ALU and storing results of operations, and a memory, such as an L1 and L2 cache memory. The processing device may be a multicore processor. The processing device may be or may comprise a central processing unit (CPU). Additionally or alternatively, the processing device may be or may comprise a microprocessor. The processing device's elements may be contained in one single integrated circuitry (IC) chip. Additionally or alternatively, the processing device may be or may comprise one or more application specific-integrated circuits (ASICs) and/or one or more field-programmable gate arrays (FPGAs) or the like. The processing device may provide one or more hardware elements for performing one or more of the named operations and/or may provide one or more processors with software running thereon for performing one or more of the named operations. The processing device may comprise one or more programmable devices such as one or more computers, application-specific integrated circuits (ASICs), Digital Signal Processors (DSPs), or Field Programmable Gate Arrays (FPGAs) which are configured to perform the named operations. Additionally or alternatively, however, the processing device may also fully or partially be embodied by hardware.

The processing device may be configured for combining the plurality of images of the sample on the microscopy slide illuminated under different illumination angles by the illumination light beams provided by the optical system by using an iterative phase retrieval algorithm.

In a further aspect of the present invention, a method for Fourier Ptychography using at least one digital microscopy system according to the present invention is disclosed. With respect to definitions and embodiments reference is made to the description of the optical system and the digital microscopy system described above or as described in more detail below.

The method steps may be performed in the given order or may be performed in a different order. Further, one or more additional method steps may be present which are not listed. Further, one, more than one or even all of the method steps may be performed repeatedly.

The method comprises the following steps:
a) providing at least one microscopy slide with a sample to the sample interface;
b) emitting a plurality of illumination light beams under different angles of light emission towards the sample plane by using the array of light emitters and illuminating the sample plane under different illumination angles by using the lenslet array comprising a plurality of lenses, and optionally passing at least one parabolic reflector and /or at least one refractive optical element;
c) imaging a plurality of images of the sample illuminated under different illumination angles by the illumination light beams provided by the optical system by using the image detector;
d) reconstructing at least one combined image of the sample by using the plurality of images imaged by the image detector using the processing device.

The method may be computer-implemented. The term "computer-implemented" as used herein is a broad term and is to be given its ordinary and customary meaning to a person of ordinary skill in the art and is not to be limited to a special or customized meaning. The term specifically may refer, without limitation, to a method involving at least one computer and/or at least one computer network or a cloud. The computer and/or computer network and/or a cloud may comprise at least one processor which is configured for performing at least one of the method steps of the method according to the present invention. Preferably each of the method steps is performed by the computer and/or computer network and/or a cloud. The method may be performed completely automatically, specifically without user interaction. The term "automatically" as used herein is a broad term and is to be given its ordinary and customary meaning to a person of ordinary skill in the art and is not to be limited to a special or customized meaning. The term specifically may refer, without limitation, to a process which is performed completely by means of at least one computer and/or computer network and/or a cloud and/or machine, in particular without manual action and/or interaction with a user.

Further disclosed and proposed herein is a computer program including computer-executable instructions for performing the method according to the present invention in one or more of the embodiments enclosed herein when the instructions are executed on a computer or computer network. Specifically, the computer program may be stored on a computer-readable data carrier and/or on a computer-readable storage medium.

As used herein, the terms "computer-readable data carrier" and "computer-readable storage medium" specifically may refer to non-transitory data storage means, such as a hardware storage medium having stored thereon computer-executable instructions. The computer-readable data carrier or storage medium specifically may be or may comprise a storage medium such as a random-access memory (RAM) and/or a read-only memory (ROM).

Thus, specifically, one, more than one or even all of method steps a) to d) as indicated above may be performed by using a computer or a computer network, preferably by using a computer program.

Further disclosed and proposed herein is a computer program product having program code means, in order to perform the method according to the present invention in one or more of the embodiments enclosed herein when the program is executed on a computer or computer network. Specifically, the program code means may be stored on a computer-readable data carrier and/or on a computer-readable storage medium.

Further disclosed and proposed herein is a data carrier having a data structure stored thereon, which, after loading into a computer or computer network, such as into a working memory or main memory of the computer or computer network, may execute the method according to one or more of the embodiments disclosed herein.

Further disclosed and proposed herein is a non-transient computer-readable medium including instructions that, when executed by one or more processors, cause the one or more processors to perform the method according to one or more of the embodiments disclosed herein.

Further disclosed and proposed herein is a computer program product with program code means stored on a machine-readable carrier, in order to perform the method according to one or more of the embodiments disclosed herein, when the program is executed on a computer or computer network. As used herein, a computer program product refers to the program as a tradable product. The product may generally exist in an arbitrary format, such as in a paper format, or on a computer-readable data carrier and/or on a computer-readable storage medium. Specifically, the computer program product may be distributed over a data network.

Finally, disclosed and proposed herein is a modulated data signal which contains instructions readable by a computer system or computer network, for performing the method according to one or more of the embodiments disclosed herein.

Referring to the computer-implemented aspects of the invention, one or more of the method steps or even all of the method steps of the method according to one or more of the embodiments disclosed herein may be performed by using a computer or computer network. Thus, generally, any of the method steps including provision and/or manipulation of data may be performed by using a computer or computer network. Generally, these method steps may include any of the method steps, typically except for method steps requiring manual work, such as providing the samples and/or certain aspects of performing the actual measurements.

Specifically, further disclosed herein are:
- a computer or computer network comprising at least one processor, wherein the processor is adapted to perform the method according to one of the embodiments described in this description,
- a computer loadable data structure that is adapted to perform the method according to one of the embodiments described in this description while the data structure is being executed on a computer,
- a computer program, wherein the computer program is adapted to perform the method according to one of the embodiments described in this description while the program is being executed on a computer,
- a computer program comprising program means for performing the method according to one of the embodiments described in this description while the computer program is being executed on a computer or on a computer network,
- a computer program comprising program means according to the preceding embodiment, wherein the program means are stored on a storage medium readable to a computer,
- a storage medium, wherein a data structure is stored on the storage medium and wherein the data structure is adapted to perform the method according to one of the embodiments described in this description after having been loaded into a main and/or working storage of a computer or of a computer network, and
- a computer program product having program code means, wherein the program code means can be stored or are stored on a storage medium, for performing the method according to one of the embodiments described in this description, if the program code means are executed on a computer or on a computer network.

Summarizing and without excluding further possible embodiments, the following embodiments may be envisaged:
Embodiment 1. An optical system configured for Fourier Ptychography comprising
   - at least one array of light emitters, wherein each light emitter is configured for emitting at least one illumination light beam towards a sample plane;
   - at least one lenslet array comprising a plurality of lenses, wherein each of the lenses is dedicated to at least one of the light emitters of the array of light emitters, wherein orientation and shape of the respective lens is adapted to the dedicated light emitter, wherein the lenslet array is configured for focusing the illumination light beams in the sample plane;
   wherein the array of light emitters and the lenslet array are arranged such that the sample plane is illuminated by the illumination light beams under different illumination angles.
Embodiment 2. The optical system according to the preceding embodiment, wherein the optical system comprises at least one parabolic reflector, wherein the parabolic reflector is arranged such that the illumination light beam having passed the lenslet array impinges on the parabolic reflector before impinging on the sample plane.
Embodiment 3. The optical system according to the preceding embodiment, wherein the parabolic reflector has a diameter of ≥ 200 mm.
Embodiment 4. The optical system according to any one of the two preceding embodiments, wherein the parabolic reflector comprises a segmented parabolic reflector.
Embodiment 5. The optical system according to any one of the preceding embodiments, wherein the optical system comprises at least one refractive optical element, wherein the refractive optical element is arranged such that the illumination light beam having passed the lenslet array impinges on the refractive optical element before impinging on the sample plane.
Embodiment 6. The optical system according to the preceding embodiment, wherein the refractive optical element comprises at least one Fresnel lens, wherein a diameter of the Fresnel lens is ≥ 200 mm.
Embodiment 7. The optical system according to any one of the preceding embodiments, wherein the lenses of the lenslet array are arranged in a direction of propagation of the light beam from the light emitters to the sample plane.
Embodiment 8. The optical system according to any one of the preceding embodiments, wherein the lenses of the lenslet array are high numerical aperture lenses.
Embodiment 9. The optical system according to any one of the preceding embodiments, wherein the light emitters of the array of light emitters are configured for sequentially emitting the illumination light beams.
Embodiment 10. The optical system according to any one of the preceding embodiments, wherein each of the light emitters comprises at least one coherent light source selected from the group consisting of at least one light-emitting diode, at least one surface emitting diode laser, at least one edge emitting diode laser.
Embodiment 11. The optical system according to the preceding embodiment, wherein the light emitter comprises at least one light-emitting diode, wherein the light light-emitting diode has a emission range at least partially located in the spectral range from 340 to 800 nm.
Embodiment 12. A digital microscopy system comprising
   - at least one optical system according to any one of the preceding embodiments;
   - at least one sample interface configured for receiving at least one microscopy slide;
   - at least one image detector, wherein the image detector is configured for imaging a plurality of images of a sample on the microscopy slide illuminated under different illumination angles by the illumination light beams provided by the optical system;
   - at least one processing device configured for reconstructing at least one combined image of the sample by using the plurality of images imaged by the image detector.
Embodiment 13. The digital microscopy system according to the preceding embodiment, wherein the image detector comprises at least one camera, wherein the camera comprises a CCD chip or a CMOS chip.
Embodiment 14. The digital microscopy system according to any one of the preceding embodiments referring to a digital microscopy system, wherein the processing device is configured for combining the plurality of images of the sample on the microscopy slide illuminated under different illumination angles by the illumination light beams provided by the optical system by using an iterative phase retrieval algorithm.
Embodiment 15. The digital microscopy system according to any one of the preceding embodiments referring to a digital microscopy system, wherein the digital microscopy system comprises at least one hematology analyzer or at least one digital pathology scanner.
Embodiment 16. A method for Fourier Ptychography using at least one digital microscopy system according to any one of the preceding embodiments referring to a digital microscopy system, wherein the method comprises the following steps:
   a) providing at least one microscopy slide with a sample to the sample interface;
   b) emitting a plurality of illumination light beams under different angles of light emission towards the sample plane by using the array of light emitters and illuminating the sample plane under different illumination angles by using the lenslet array comprising a plurality of lenses;
   c) imaging a plurality of images of the sample illuminated under different illumination angles by the illumination light beams provided by the optical system by using the image detector;
   d) reconstructing at least one combined image of the sample by using the plurality of images imaged by the image detector using the processing device.
Embodiment 17. The method according to the preceding embodiment, wherein the method is computer-implemented.
Embodiment 18. A computer program comprising instructions which, when the program is executed by the digital microscopy system according to any one of the preceding embodiments referring to a digital microscopy system, cause the digital microscopy system to perform the method according to any one of the preceding embodiments referring to a method.
Embodiment 19. A computer-readable storage medium comprising instructions which, when the instructions are executed by the digital microscopy system according to any one of the preceding embodiments referring to a digital microscopy system, cause the digital microscopy system to perform the method according to any one of the preceding embodiments referring to a method.
Embodiment 20. A non-transient computer-readable medium including instructions that, when executed by one or more processors, cause the one or more processors to perform he method according to any one of the preceding embodiments referring to a method.

### Short description of the Figures

Further optional features and embodiments will be disclosed in more detail in the subsequent description of embodiments, preferably in conjunction with the dependent claims. Therein, the respective optional features may be realized in an isolated fashion as well as in any arbitrary feasible combination, as the skilled person will realize. The scope of the invention is not restricted by the preferred embodiments. The embodiments are schematically depicted in the Figures. Therein, identical reference numbers in these Figures refer to identical or functionally comparable elements.

In the Figures:
Figures 1A and 1B show an embodiment of an optical system according to the present invention;
Figures 2A and 2B show an embodiment of the optical system according to the present invention;
Figures 3A and 3Bshow an embodiment of the optical system according to the present invention; and
Figure 4 shows an embodiment of the optical system according to the present invention.

### Detailed description of the embodiments

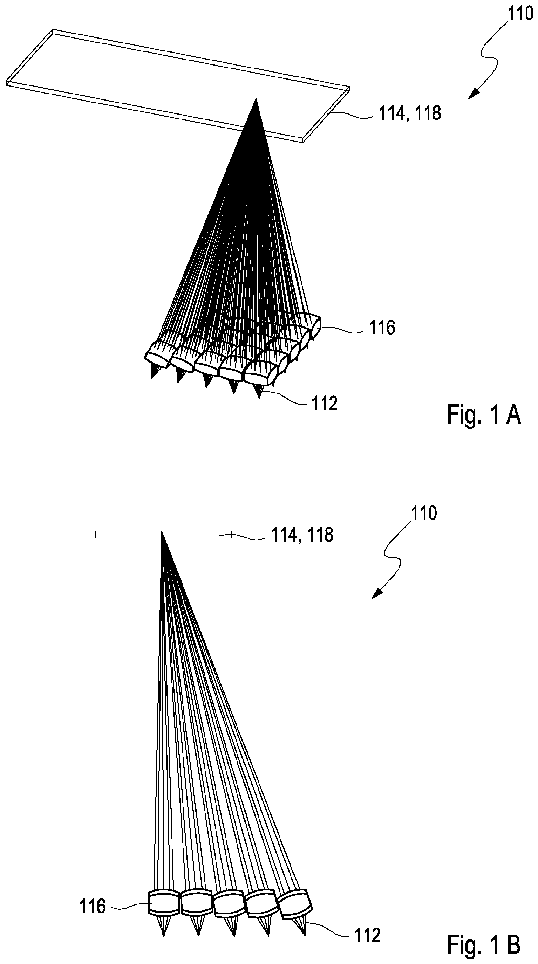

Figures 1A and 1B show an exemplary and schematic embodiment of an optical system 110 according to the present invention in a perspective view (Fig. 1A) and in a cross sectional view (Fig. 1B). The optical system 110 is configured for Fourier Ptychography.

As shown in Figures 1A and 1B, the optical system 110 comprises at least one array of light emitters 112. Each of the light emitters 112 may comprise at least one coherent light source selected from the group consisting of at least one light-emitting diode, at least one surface emitting di-ode laser, at least one edge emitting diode laser. For example, the light emitters 112 may have a center wavelengths at least partially located in the spectral range of 340 to 800 nm. For example, the LED may have may have an emission range at least partially located in the spectral range from 340 to 800 nm. Each light emitter 112 is configured for emitting at least one illumination light beam towards a sample plane 114.

The optical system 110 comprises at least one lenslet array 116 comprising a plurality of lenses. Each of the lenses is dedicated to at least one of the light emitters 112 of the array of light emitters 112. Orientation and shape of the respective lens is adapted to the dedicated light emitter 112. The lenslet array 116 is configured for focusing the illumination light beams in the sample plane 114. The array of light emitters 112 and the lenslet array 116 are arranged such that the sample plane 114 is illuminated by the illumination light beams under different illumination angles. For example, the sample plane 114 may be defined by a receptacle configured for holding a microscopy slide 118.

As further shown in Figures 1A and 1B, the light emitters 112 of the array of light emitters 112 may be arranged such that the light emitters 112 emit the illumination light beams under different angles of light emission towards the sample plane 114, e.g. towards the lenslet array 116. For example, each of the light emitters 112 may be tilted individually with respect to the sample plane 114. For example, the light emitters 112 may be arranged within a flat plane which may be tilted with respect to the sample plane 114.

The lenslet array 116 may be configured for guiding the illumination light beams to the sample plane. The sample may be or may comprise at least one biological specimen, such as one or more of: blood; blood serum; blood plasma; urine; saliva. The sample may be or may comprise a biological material such as a tissue or a smear. The sample can be mixed, e.g. with some assay specific reagents involving chromogenic or turbidimetric indicators. Additionally or alternatively, the sample may be or may comprise a chemical substance or compound and/or a reagent. The sample may specifically be a liquid sample, such as an aliquot of a fluid substance of the chemical or biological compound. For example, the liquid sample may be or may comprise at least one pure liquid, such as a liquid substance and/or a solution containing one or more liquid substances, comprising the at least one chemical and/or the biological substance. As another example, the liquid sample may be or may comprise a liquid mixture, such as a suspension, an emulsion and/or a dispersion of one or more chemical and/or biological substances. However, other, e.g. on-liquid samples are also possible. Other sample types may be, for example, tissue or homogenized material. The sample may be provided using at least one microscopy slide 118.

The array of light emitters 112 may be arranged, e.g. linearly arranged, on a printed circuit board assembly (PCBA). For example, the array of light emitters 112 may mounted using a "chip-on-board" technology and/or a "chip-on-flex" technology. For example, for arranging the light emitters 112 on a curved plane LEDs may be used which are mounted to flex-print assemblies using a chip-on-board technology.

The light emitters 112 of the array may be of the same type or, alternatively, of a different type. The light emitters 112 of the array may be controllable independently from each other, such as by providing electric current to each of the light emitters 112 independently. The light emitters 112 may be configured for emitting light beams of the same or of different wavelengths. For example, the light emitters 112 are configured for emitting light beams of the same wavelength. The light emitters 112 of the array of light emitters may be configured for sequentially emitting the illumination light beams.

The lenslet array 116 may comprise at least two lenses. The lenses may be converging lenses. Each of the lenses may be configured for focusing an illumination light beam generated by the dedicated light emitter and impinging on the lens in the sample plane 114. The lenses of the lenslet array 116 may have a low diameter, e.g. a diameter of a few millimeters. The lenses of the lenslet array 116 may have different properties, e.g. differ in shape and/or orientation. The lenses of the lenslet array 116 may be arranged in a direction of propagation of the light beam from the light emitters 112 to the sample plane. The lenses of the lenslet array 116 may be high numerical aperture lenses. For example, the lenses may have a numerical aperture up to NA ~ 0.5. Using such a lenslet array 116 can significantly reduce scanning time.

Each of the lenses is dedicated to at least one of the light emitters 112 of the array of light emitters 112. For example, each lens is assigned to at least one of the light emitters 112. Orientation and shape of the respective lens is adapted to the dedicated light emitter 112. Each individual lens in shape and/or orientation may be optimized for a dedicated light emitter(s). The number of lenses of the array may correspond to a number of light emitters 112 of the array of light emitters 112. However, other embodiments are feasible. For example, a plurality of light emitters 112 may share a combined lens.

The array of light emitters 112 and the lenslet array 116 are arranged such that the sample plane 114 is illuminated by the illumination light beams under different illumination angles. The illumination angle maybe an angle of incidence between a ray incident on a surface of the sample plane 114 and the normal to the surface at a point of incidence. The illumination angles may differ by between 0° and maximally 30° relative to the normal. The arrangement of the array of light emitters 112 and the lenslet array 116 may refer to a relative arrangement of the array of light emitters 112 and the lenslet array 116. In the embodiment shown in Figures 1A and 1B, the optical system 110, in a beam path of the illumination light from the light emitter 112 to the sample plane 114, comprises the array of light emitters 112 and the lenslet array 116 only, without any further optical components. Such an arrangement may be in particular suitable for low to medium incident angles, e.g. between 0° and 30°.

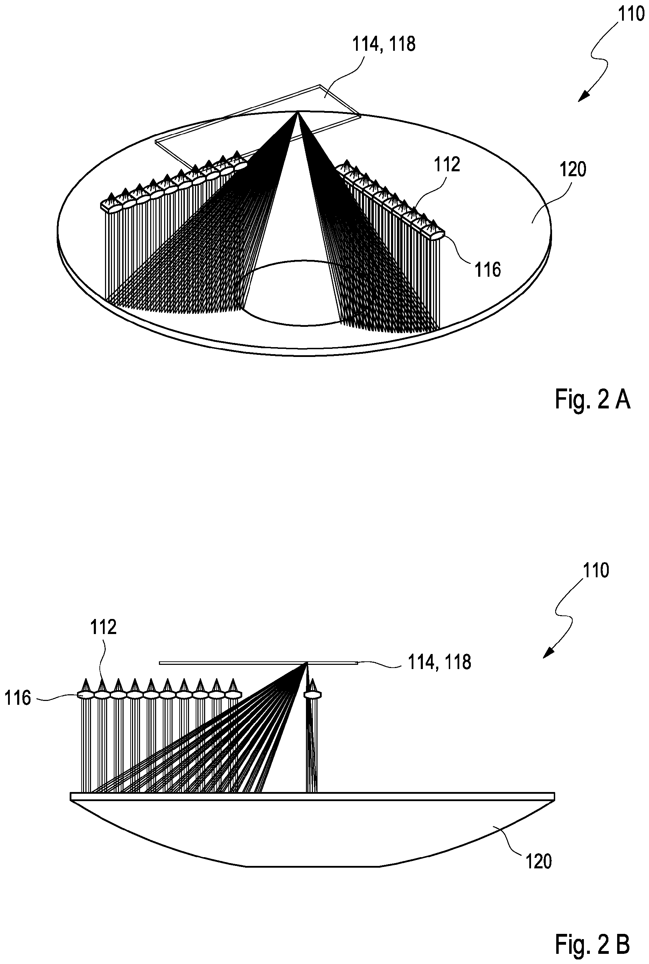

The optical system 110 further may comprise at least one parabolic reflector 120, e.g. a parabolic mirror. Such an embodiment of an optical system 110 is depicted in Figures 2A and 2B. The parabolic reflector 120 may be a reflector having a paraboloidal three-dimensional shape. The parabolic reflector 120 may have a reflective surface. The parabolic reflector 120 may be arranged such that the illumination light beam having passed the lenslet array 116 impinges on the parabolic reflector 120 before impinging on the sample plane 114. The light emitters 112 and/or the lenslet array 116 may be arranged within a flat plane parallel to the sample plane with the light emitters 112 aligned in the same orientation such that the illumination light beams, having passed the lenslet array 116, reach the parabolic reflector 120 as parallel rays. The parabolic reflector 120 may be configured for focusing parallel rays into a focus point on the sample plane 114. Using the lenslet array 116 in combination with the parabolic reflector 120, e.g. a parabolic mirror, may be advantageous for medium to high incident angles, e.g. of 20° to 60° relative to the perpendicular.

The parabolic reflector 120 may have a diameter of ≥ 200 mm. Such a large diameter parabolic reflector 120 can allow for optimized positioning of the light emitters while still ensuring high intensities. Parabolic reflectors 120 can be available at low cost and can be manufactured with high precision.

For example, the parabolic reflector 120 may be used in combination with at least one lenslet array, e.g. lenslet array 116. Further LEDs may be placed at the bottom of the parabolic reflector 120, e.g. in Figure 2. LEDs or an array of LEDs with a respective lenslet array may be installed in the recess of the parabolic reflector 120, directing the light beam directly upwards to the sample plane (not via the parabolic mirror). The lenslet array may cover low incident angles and the parabolic reflector 120 can cover medium to high incident angles.

In the embodiment of Figures 2A and 2B, the parabolic reflector 120 may comprise a continuous surface.

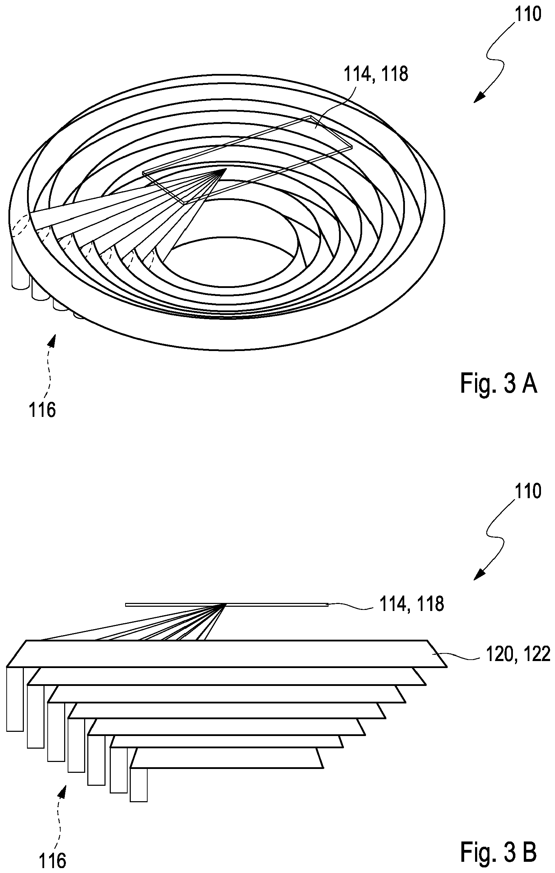

In the embodiment of the optical system 110 shown in Figures 3A and 3B, the parabolic reflector 120 may comprise a segmented parabolic reflector 122. The segmented parabolic reflector 122 may comprise an array of subreflectors configured for optically functioning as segments of a monolithic parabolic reflector. Using the lenslet array 116 in combination with a segmented parabolic reflector 122, e.g. a parabolic mirror, may be advantageous for medium to very high incident angles, e.g. 30° to 80° relative to the perpendicular.

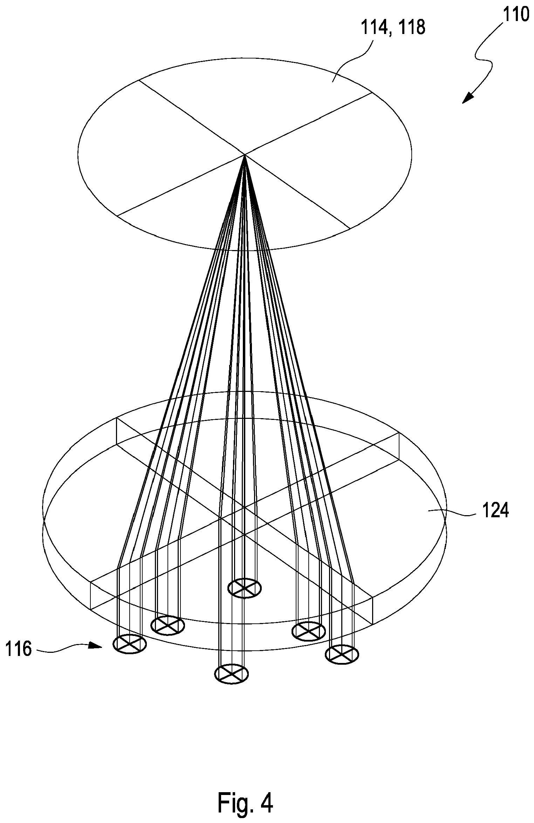

Figure 4 shows an embodiment of the optical system 110 having at least one refractive optical element 124. The refractive optical element 124 may be arranged such that the illumination light beam having passed the lenslet array 116 impinges on the refractive optical element 124 before impinging on the sample plane 114. The refractive optical element 124 may comprise at least one Fresnel lens. A diameter of the Fresnel lens may be ≥ 200 mm. Using the lenslet array 116 in combination with at least one Fresnel lens can allow for improved intensity in a forward direction.

The proposed arrangement of light emitters 112, e.g. LEDs, in combination of additional optical elements, e.g. one or more of 116, 120, 122, 124, can allow to increase the light intensity of each LED (especially LEDs with large incident angles) that is delivered into a sample plane, e.g. of a hematology analyzer. The light intensity that can be delivered into the sample plane 114 per light emitter 112 can be increased significantly. An advantage of the higher light intensity may be allowing for a shorter camera integration time and hence higher throughput time. In addition, an optimized arrangement of light emitters 112 may be possible that fits better the LED PCBA manufacturing procedures which typically lead to planar LED arrangements.

### List of reference numbers

- 110: optical system
- 112: light emitter
- 114: sample plane
- 116: lenslet array
- 118: microscopy slide
- 120: parabolic reflector
- 122: segmented parabolic reflector
- 124: refractive optical element

## Claims

1. An optical system (110) configured for Fourier Ptychography comprising
- at least one array of light emitters (112), wherein each light emitter (112) is configured for emitting at least one illumination light beam towards a sample plane (114);
- at least one lenslet array (116) comprising a plurality of lenses, wherein each of the lenses is dedicated to at least one of the light emitters (112) of the array of light emitters (112), wherein orientation and shape of the respective lens is adapted to the dedicated light emitter (112), wherein the lenslet array (116) is configured for focusing the illumination light beams in the sample plane (114);
wherein the array of light emitters (112) and the lenslet array (116) are arranged such that the sample plane (114) is illuminated by the illumination light beams under different illumination angles.

2. The optical system (110) according to the preceding claim, wherein the optical system (110) comprises at least one parabolic reflector (120), wherein the parabolic reflector (120) is arranged such that the illumination light beam having passed the lenslet array (116) impinges on the parabolic reflector (120) before impinging on the sample plane (114).

3. The optical system (110) according to the preceding claim, wherein the parabolic reflector (120) comprises a segmented parabolic reflector (122).

4. The optical system (110) according to any one of the preceding claims, wherein the optical system (110) comprises at least one refractive optical element (124), wherein the refractive optical element (124) is arranged such that the illumination light beam having passed the lenslet array (116) impinges on the refractive optical element (124) before impinging on the sample plane (114).

5. The optical system (110) according to the preceding claim, wherein the refractive optical element (124) comprises at least one Fresnel lens, wherein a diameter of the Fresnel lens is ≥ 200 mm.

6. The optical system (110) according to any one of the preceding claims, wherein the lenses of the lenslet array (116) are arranged in a direction of propagation of the light beam from the light emitters (112) to the sample plane (114).

7. The optical system (110) according to any one of the preceding claims, wherein the lenses of the lenslet array (116) are high numerical aperture lenses.

8. The optical system (110) according to any one of the preceding claims, wherein the light emitter (112) comprises at least one light-emitting diode, wherein the light light-emitting diode has a emission range at least partially located in the spectral range from 340 to 800 nm.

9. A digital microscopy system comprising
- at least one optical system (110) according to any one of the preceding claims;
- at least one sample interface configured for receiving at least one microscopy slide (118);
- at least one image detector, wherein the image detector is configured for imaging a plurality of images of a sample on the microscopy slide (118) illuminated under different illumination angles by the illumination light beams provided by the optical system (110);
- at least one processing device configured for reconstructing at least one combined image of the sample by using the plurality of images imaged by the image detector.

10. The digital microscopy system according to the preceding claim, wherein the processing device is configured for combining the plurality of images of the sample on the microscopy slide illuminated under different illumination angles by the illumination light beams provided by the optical system (110) by using an iterative phase retrieval algorithm.

11. The digital microscopy system according to any one of the preceding claims referring to a digital microscopy system, wherein the digital microscopy system comprises at least one hematology analyzer or at least one digital pathology scanner.

12. A method for Fourier Ptychography using at least one digital microscopy system according to any one of the preceding claims referring to a digital microscopy system, wherein the method comprises the following steps:
a) providing at least one microscopy slide (118) with a sample to the sample interface;
b) emitting a plurality of illumination light beams under different angles of light emission towards the sample plane (114) by using the array of light emitters (112) and illuminating the sample plane (114) under different illumination angles by using the lenslet array (116) comprising a plurality of lenses;
c) imaging a plurality of images of the sample illuminated under different illumination angles by the illumination light beams provided by the optical system (110) by using the image detector;
d) reconstructing at least one combined image of the sample by using the plurality of images imaged by the image detector using the processing device.

13. A computer program comprising instructions which, when the program is executed by the digital microscopy system according to any one of the preceding claims referring to a digital microscopy system, cause the digital microscopy system to perform the method according to any one of the preceding claims referring to a method.

14. A computer-readable storage medium comprising instructions which, when the instructions are executed by the digital microscopy system according to any one of the preceding claims referring to a digital microscopy system, cause the digital microscopy system to perform the method according to any one of the preceding claims referring to a method.

15. A non-transient computer-readable medium including instructions that, when executed by one or more processors, cause the one or more processors to perform he method according to any one of the preceding claims referring to a method.
